# EUROPEAN PATENT SPECIFICATION

(11) **EP 4 306 373 B1**
(45) Date of publication and mention of the grant of the patent: **12.11.2025**
(21) Application number: 22184798.1
(22) Date of filing: 13.07.2022
(51) Int. Cl.: B60T 17/22, F16D 65/12, F16D 66/02, F16D 55/226, F16D 65/00, F16D 65/18, F16D 65/38

(54) **METHOD AND APPARATUS FOR CALCULATING THE RUNNING CLEARANCE OF A DISC BRAKE**
VERFAHREN UND VORRICHTUNG ZUM BERECHNEN DES LAUFSPIELS EINER SCHEIBENBREMSE
PROCÉDÉ ET APPAREIL POUR CALCULER LE JEU FONCTIONNEL D'UN FREIN À DISQUE

(43) Date of publication of application: 17.01.2024
(73) Proprietor: Meritor Heavy Vehicle Braking Systems (UK) Limited, Cwmbran, Gwent NP44 3XU (GB)
(72) Inventor: Watkins, Rhys, Cwmbran, NP44 3XU (GB); Cleary, Sean, Cwmbran, NP44 3XU (GB); Szafnauer, Alex J., Cwmbran, NP44 3XU (GB)
(74) Representative: Whitfield, Jack Stephen

(56) References cited:
- EP-A1- 1 186 495
- EP-A1- 2 998 607
- EP-A1- 3 179 127
- EP-A2- 1 127 763
- WO-A1-2018/022615

## Description

### FIELD OF THE INVENTION

The present invention relates to a method of calculating the running clearance of a disc brake, as well as a brake assembly for a disc brake.

### BACKGROUND OF THE INVENTION

Disc brakes are commonly used for braking heavy vehicles such as trucks, buses and coaches. Disc brakes conventionally comprise a brake carrier and a caliper. The brake carrier is arranged to carry brake pads on each side of a rotor. The caliper is slidably mounted on the brake carrier by two or more guide assemblies such that when the disc brake is actuated, the caliper can slide with respect to the brake carrier so that both brake pads are urged onto a rotor in a clamping action to effect braking.

It is desirable for the vehicle operator to be provided with the wear status of the brake pad friction material in order to be notified when brake pads are to be changed, to maintain safe operation of the disc brake. In some installations, air actuated disc brakes are fitted with electrical continuous wear sensors (CWS) which indicate the amount of wear of the brake pads and rotor. Typically, the output of a CWS is a voltage that can be interpreted by a vehicles electronic braking system (EBS) to determine the wear at each wheel. The EBS can then rebalance the pressure applied at each wheel to try to ensure even wear such that all pads can be replaced at the same time. This information also enables the operator to monitor and plan for when the brake pads will need replacing. In disc brakes having conventional adjuster mechanisms, such a CWS typically monitors the amount of adjustment of the disc brake over its life in order to estimate the wear. The CWS is typically mounted to the brake housing and monitors the rotation of a manual adjuster shaft that is in communication with the adjuster mechanism. The more the manual adjuster shaft is rotated over the life of a brake, the more the disc brake has been adjusted to bring the brake pads closer to the rotor to try and ensure a suitable running clearance.

Typically, when a disc brake is not being applied there should be a clearance between each brake pad and the rotor of the order of 0.5 mm between each pad and the rotor, i.e., a total of the order of 1 mm from the brake assembly as a whole. This clearance is known as the running clearance, with the total running clearance being the clearance between the inboard brake pad and the rotor plus the clearance between the outboard brake pad and the rotor.

As a disc brake wears over its life, or malfunctions, the running clearance can change. There is an allowable tolerance window for an acceptable running clearance for proper function of the disc brake, but this can be exceeded if the running clearance is too high, affecting performance of the brake and/or torque generation by the brake pads, due to insufficient clamping force being applied to the brake disc. However, in this case, it is often not apparent to the operator that the brake performance has slipped below an acceptable limit until a high brake force is demanded (e.g., an emergency braking event), which is a serious safety issue. For example, the stopping distance of the vehicle could be significantly increased, the vehicle could pull to one side, or the vehicle could even roll away when parked.

Conversely, if the running clearance is too low, the brake pads can drag on the rotor, potentially leading to excessive wear or overheating of the friction material of the brake pads and/or the rotor. Again, this may not be detected by the operator until a serious issue has developed.

EP3179127A1 discloses an adjuster assembly for manually adjusting the position of a brake pad relative to a brake rotor of a disc brake, where the adjuster comprises a CWS. Such known arrangements can provide only provide an estimate of the total wear of the brake pads and rotor. Accurate measurement of the running clearance requires the vehicle to be stationary: for example, so the wear of the friction material of each pad can be manually measured. It would be desirable to be able to more precisely monitor the running clearance, particularly if the output could be provided live to an operator of the vehicle.

### SUMMARY OF THE INVENTION

A first aspect of the invention provides a method of calculating the total running clearance of a disc brake having inboard and outboard brake pads arranged to contact a rotor during a braking operation, wherein a piston assembly is configured to actuate the inboard brake pad of the disc brake. The method includes:
detecting the axial movement of a component of the piston assembly to provide data indicating the displacement of the component of the piston assembly during the braking operation; and
determining the amount of displacement of the component of the piston assembly that occurs before the inboard brake pad and outboard brake pad are both contacting the rotor to provide a calculated running clearance.

By determining the displacement of the component of the piston assembly before the inboard brake pad and outboard brake pad are contacting the rotor, the total running clearance can be calculated. This information has a range of applications such as indicating uneven pad wear inboard-outboard or indicating other faults in the disc brake such as contamination or wear.

Determining the amount of displacement of the component of the piston assembly that occurs before the inboard brake pad and outboard brake pad are both contacting the rotor may comprise:
obtaining data indicating the input force applied and/or the pressure applied during the braking operation; and
comparing the change in displacement of the component of the piston assembly during the braking operation to the input force and/or to the pressure applied during the braking operation.

The relationship of the input force applied and/or the pressure applied relative to the change in displacement of the component of the piston assembly changes during the braking operation when the inboard and outboard brake pads come into contact with the rotor. By comparing these parameters, the point at which the inboard and outboard brake pads come into contact with the rotor can be calculated. The amount of displacement of the component of the piston assembly at this point can then be used to calculate the total running clearance of the disc brake.

Determining the amount of displacement of the component of the piston assembly that has occurred before the inboard brake pad and outboard brake pad are both contacting the rotor may comprise plotting on a graph the change in displacement of the component of the piston assembly during the braking operation against the input force and/or the pressure applied during the braking operation. A knee point detection algorithm may then be used to identify a knee point of the graph, defined by a change in the gradient of the graph indicating that the inboard brake pad and outboard brake pad are contacting the rotor.

By plotting the parameters on a graph and calculating the gradient at each point, the change in gradient enables a mathematical relationship between the parameters to be defined. This can be used to produce the knee point detection algorithm that mathematically defines the knee point of the graph that indicates that the inboard brake pad and outboard brake pad are contacting the rotor.

The method may comprise determining the amount of displacement of the component of the piston assembly that has occurred before the inboard brake pad is contacting the rotor. The method may comprise plotting on a graph the change in displacement of the component of the piston assembly during the braking operation against the input force and/or the pressure applied during the braking operation and using a knee point detection algorithm to identify a second knee point of the graph, defined by a change in the gradient of the graph indicating that the inboard brake pad is contacting the rotor. The knee point of the graph defined by a change in the gradient of the graph indicating that the inboard brake pad and outboard brake pad are contacting the rotor is a first knee point.

The second knee point of the graph indicates that the inboard brake pad is contacting the rotor. The displacement up until the second knee point consists entirely of the inboard brake pad moving through air, which has a very low resistance. Once the inboard brake pad contacts the rotor, some of the displacement will be due to the sliding of the caliper relative to the carrier, to move the outboard pad towards the rotor. Although resistance will still be very low, a change in the gradient of the graph can be detected up until the first knee point when both the inboard brake pad and the outboard brake pad are in contact with the rotor. This may allow the calculated running clearance to be split between the inboard clearance and the outboard clearance.

The method may further comprise verifying the method by:
performing a testing process where a plurality of braking operations are made;
obtaining a plurality of physical measurements of the running clearance during the plurality of braking operations;
comparing the plurality of physical measurements of the running clearance to the calculated running clearance to verify the accuracy of the calculated running clearance.

Comparing the plurality of physical measurements of the running clearance provides data relating to the accuracy of the method, which may allow refinement to be made to the knee point detection algorithm.

The method may further comprise optimising the method if the calculated running clearance does not match the physical measurements of the running clearance by adjusting the knee point detection algorithm accordingly, to more accurately reflect the physical measurements.

In a further embodiment of the invention a brake assembly for a disc brake is provided. The brake assembly comprises:
a caliper housing;
a piston assembly moveably disposed within the caliper housing and configured to actuate a first brake pad assembly in the axial direction of a brake rotor from a first retracted position to a first extended position during a braking operation; and
a sensor arrangement configured to detect the position of a component of the piston assembly to indicate the displacement of the component of the piston assembly in the axial direction during the braking operation.

A sensor arrangement that can detect the position of a component of the piston assembly enables the running clearance to be calculated.

The sensor arrangement may be fixed relative to the caliper housing such that there is relative movement between the sensor arrangement and the component of the piston assembly during the braking operation.

The brake assembly may further comprise an adjuster mechanism that is operatively connected to the piston assembly and is configured to adjust the first extended position to ensure an acceptable total running clearance between the first brake pad assembly and the rotor and a second brake pad assembly and the rotor. The sensor arrangement may comprise a first sensor and a second sensor. The first sensor may be configured to detect a position of the adjuster mechanism to determine the total wear. The second sensor may be configured to detect the displacement of the component of the piston assembly in the axial direction.

The sensor arrangement may further comprise a wear sensor arm in communication with the adjuster mechanism. The wear sensor arm may be configured to displace relative to the caliper housing in the axial direction as the adjuster mechanism adjusts the first extended position of the piston assembly. The first sensor may be in communication with the wear sensor arm to detect the displacement of the wear sensor arm in the axial direction. The second sensor may be in communication with the component of the piston assembly to detect the displacement of the component of the piston assembly in the axial direction.

The wear sensor arm may be configured such that as the wear sensor arm displaces, the wear sensor arm actuates a first actuating member of the sensor arrangement. The first sensor may be configured to detect the actuation of the actuating member. The component of the piston assembly may be configured such that as the component of the piston assembly displaces, the component of the piston assembly actuates a second actuating member of the sensor arrangement. The second sensor may be configured to detect the movement of the second actuating member.

The first actuating member may be a plunger that is received by the first sensor. The second actuating member may be a plunger that is received by the second sensor.

The first sensor and the second sensor may be located in a common housing that is fixed relative to the caliper housing.

This is an efficient use of space within the brake assembly and enables the sensor arrangement to be retrofitted to existing disc brakes.

The sensor arrangement may be fixed relative to the component of the piston assembly such that the sensor arrangement is displaced together with the component of the piston assembly in the axial direction during the braking operation.

The sensor arrangement may comprise a single sensor configured to detect a position of the adjuster mechanism to determine the total wear and the displacement of the component of the piston assembly in the axial direction.

As the sensor arrangement is fixed relative to the component of the piston assembly, a single sensor can detect both the position of the adjuster mechanism and the displacement of the component of the piston assembly in the axial direction.

The sensor arrangement may further comprise a wear sensor arm in communication with the adjuster mechanism. The wear sensor arm may be configured to displace relative to the caliper housing in the axial direction as the adjuster mechanism adjusts the first extended position of the piston assembly. The sensor may be in communication with the wear sensor arm to detect the displacement of the wear sensor arm in the axial direction. The sensor may also be in communication with the component of the piston assembly to detect the displacement of the component of the piston assembly in the axial direction.

The sensor arrangement may further comprise an actuating member fixed relative to the wear sensor arm such that as the wear sensor arm displaces, the actuating member actuates. The sensor may be configured to detect relative movement of the actuating member and the sensor.

As the sensor is fixed relative to the component of the piston assembly and the actuating member is fixed relative to the wear sensor arm, relative movement of the actuating member and the sensor will occur both when the wear sensor arm moves and when the component of the piston assembly moves. Therefore, by using the single sensor to measure relative movement between the actuating member and the sensor, data can be produced indicating the relative movement that has been caused by the adjustment of the disc brake and the relative movement that has been caused by the displacement of the component of the piston assembly. This data can be used to calculate the total running clearance.

The actuating member may be a plunger that is received by the sensor.

The brake assembly may further comprise a manual adjuster shaft that is in communication with the adjuster mechanism, such that when the adjuster mechanism adjusts the first extended position of the piston assembly, the manual adjuster shaft rotates. The wear sensor arm may be rotatably fixed relative to the caliper housing such that the wear sensor arm will index along the manual adjuster shaft as the manual adjuster shaft rotates. The wear sensor arm and the manual adjuster shaft may have corresponding threads, such that rotation of the manual adjuster shaft causes linear axial translation of the wear sensor arm.

The component of the piston assembly may be a return plate that actuates in an axial direction towards and away from the rotor of the disc brake during the braking operation, such that the sensor arrangement is configured to detect the displacement of the return plate in the axial direction.

The component of the piston assembly may comprise a projection configured to be detected by the sensor arrangement to indicate the axial movement of the component of the piston assembly, to indicate the displacement of the component of the piston assembly during the braking operation.

Such an arrangement is an efficient use of space within the brake assembly and can be easily retrofitted to an existing brake assembly.

If the component of the piston assembly is a return plate, the projection may be a lug in a corner of the return plate.

### BRIEF DESCRIPTION OF THE DRAWINGS

Embodiments of the invention will now be described with reference to the accompanying drawings, in which:
Figure 1 is a perspective view of a disc brake assembly;
Figure 2A is a plan view of the disc brake assembly of Figure 1 in a first condition before a braking operation;
Figure 2B is a plan view of the disc brake assembly of Figure 1 in a second condition after a braking operation;
Figure 3 is a cut-away view of the disc brake assembly of Figure 1, showing more detail of a sensor arrangement;

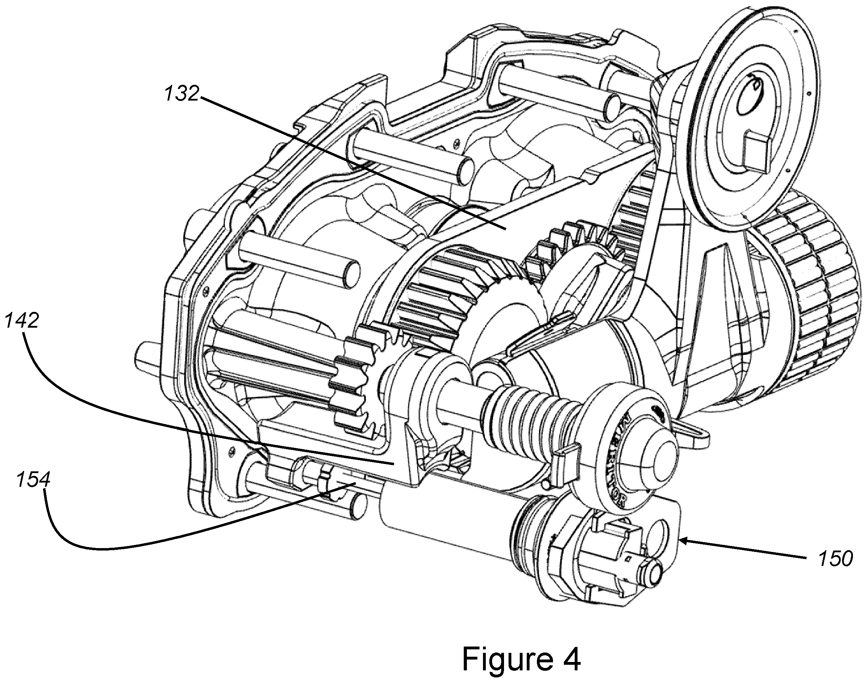

Figure 4 is a detail view of the disc brake assembly of Figure 1, showing more detail of the internal components of the disc brake assembly;
Figure 5 shows Figure 4 from an alternative angle;
Figure 6 is a perspective view of a return plate of the disc brake assembly of Figure 1;
Figure 7 is a perspective view of the sensor arrangement of the disc brake assembly of Figure 1;
Figure 8 is a cross-sectional view of an alternative disc brake;
Figure 9 is an example graph, showing the displacement of a wear arm of the disc brake of Figure 8 plotted against the displacement of a component of a piston assembly of the disc brake of Figure 8;
Figure 10 is an example graph showing the displacement of a component of a piston assembly of the disc brake assembly of Figure 1 or Figure 8, plotted against the pressure applied by the actuation mechanism of the disc brake assembly; and
Figures 11A to 11D are schematic views of four stages of the braking operation of the of the disc brake assembly of Figure 1 or Figure 8.

### DETAILED DESCRIPTION OF EMBODIMENTS

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention. Where the word 'or' appears, this is to be construed to mean 'and/or' such that items referred to are not necessarily mutually exclusive and may be used in any appropriate combination.

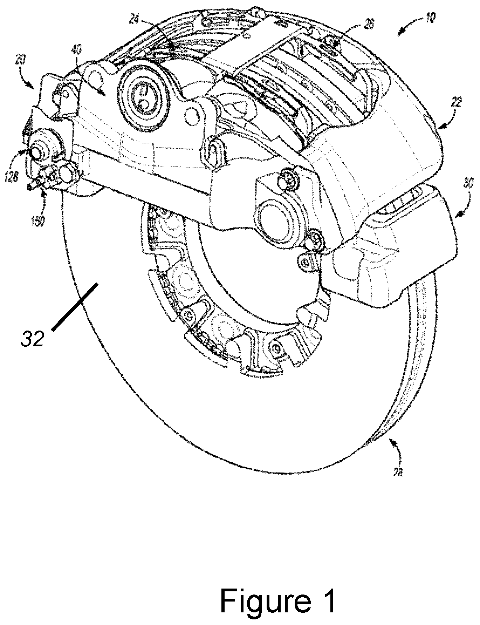

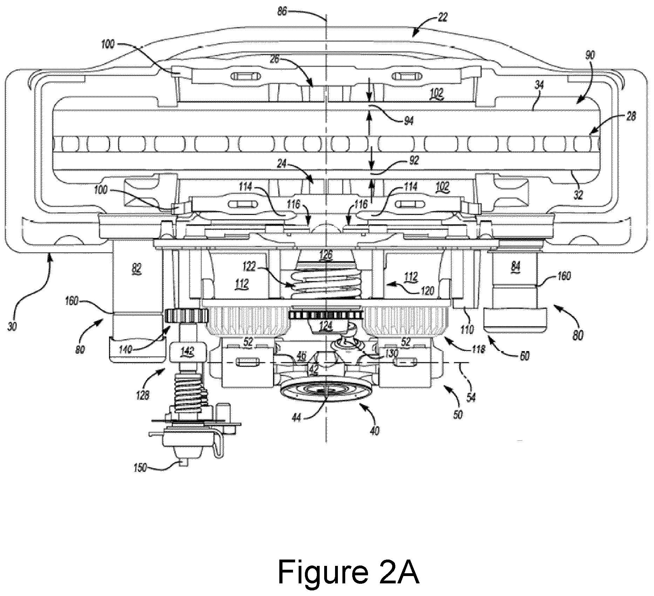

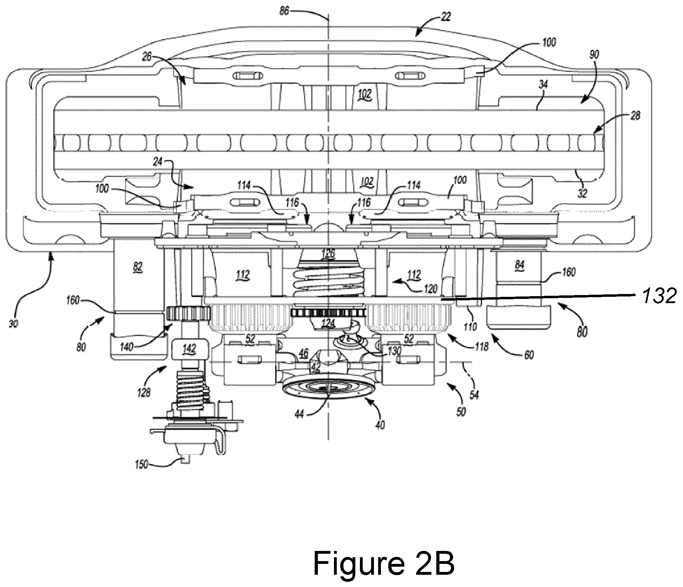

Referring to Figures 1, 2a, and 2b, a brake assembly 10 is shown. The brake assembly 10 may be provided with a vehicle, such as a motor vehicle like a truck, bus, farm equipment, military transport or weaponry vehicle, or cargo loading equipment for land, air, or marine vessels. In at least one embodiment, the brake assembly 10 may include a caliper housing 20, a caliper bridge 22, a first brake pad assembly 24, a second brake pad assembly 26, a rotor 28, and a carrier 30.

The caliper housing 20 may receive and position various components of the brake assembly 10. For example, the caliper housing 20 may facilitate mounting of an actuator 40. The actuator 40 may be of any suitable type, such as a pneumatic, electrical, or electromechanical actuator. The actuator 40 may be operatively connected to an actuating lever 42.

The actuating lever 42 may perform an angular reciprocal swinging movement in response to the action of a thrust member 44 of the actuator 40 to apply the brakes or actuate the first brake assembly 24 and the second brake pad assembly 26. The actuating lever 42 may be disposed proximate or may be attached to a rotary actuating member 46 that together may at least partially define an operating shaft 50 that may be rotatably supported within the caliper housing 20. The operating shaft 50 may be configured to rotate about an operating shaft axis 54.

The operating shaft 50 may be rotatably disposed in the caliper housing 20. For example, the operating shaft 50 may be disposed on rollers 52. The rollers 52 may extend along and may rotate about a roller axis that may extend substantially parallel to and may be offset from the operating shaft axis 54 to form an eccentric actuating arrangement. The rollers 52 may bear against a piston assembly 60 that may be moveably or slidably disposed on the caliper housing 20. The first brake pad assembly 24 or the second brake pad assembly 26 may be disposed proximate the piston assembly 60 and may be actuated by the piston assembly 60.

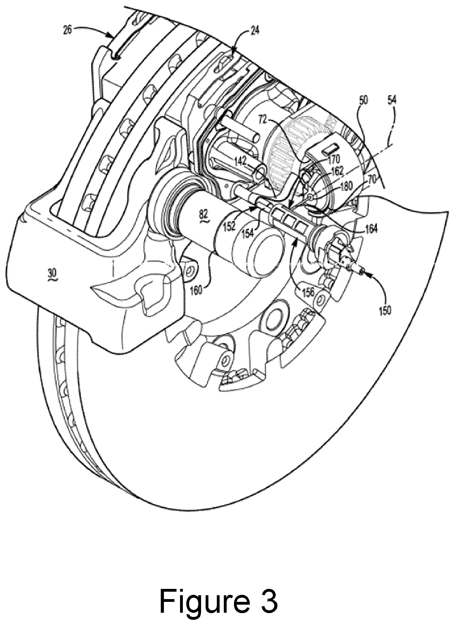

Referring to Figure 3, the operating shaft 50 may be provided with a cam profile or cam surface 70 that may engage a bearing surface 72. The operating shaft axis 54 may move toward the rollers 52 when the operating shaft 50 rotates in response to extending the actuator 40. The rotational motion of the operating shaft 50 and the rollers 52 may actuate the piston assembly 60 to translate the first brake pad assembly 24 from a first retracted position to a first extended position or an applied position. Further angular rotation of the operating shaft 50 may ultimately result in translation of the second brake pad assembly 26 from a second retracted position to a second extended position or an applied position.

Referring to Figures 1, 2a and 2b, the caliper bridge 22 may be integrally formed with or may be fixedly disposed on the caliper housing 20. For example, the caliper bridge 22 may be coupled to the caliper housing 20 with one or more fasteners, such as a bolt. The caliper bridge 22 may cooperate with the caliper housing 20 to at least partially define an opening. In at least one embodiment, the first and second brake pad assembly 24, 26, may be at least partially disposed in the opening.

The caliper housing 20 and the caliper bridge 22 may be movably disposed on the carrier 30. For example, the caliper housing 20 may be slidably disposed on the slide pin assembly 80. The slide pin assembly 80 may be fixedly disposed on the carrier 30 and may interconnect or extend between the caliper bridge 22 and the caliper housing 20. One or more slide pin assemblies 80 may be provided. In Figure 2a, two slide pin assemblies 80 are shown that each have a corresponding slide pin 82, 84. The slide pin assembly 80 may act as a locating feature to locate the caliper housing 20 relative to the carrier 30 and/or caliper bridge 22.

The caliper bridge 22 may be fixed to the caliper housing 20 and may cooperate to reactively translate the second brake pad assembly 26 toward the second side 34 of the rotor 28 after the first brake pad assembly 24 engages the first side 32 of the rotor 28. The caliper housing 20 and the caliper bridge 22 may slide together on slide pins 82, 84.

The carrier 30 may facilitate positioning of the first brake pad assembly 24 and the second brake pad assembly 26 with respect to the rotor 28 to facilitate braking of the vehicle or a vehicle wheel. The rotor 28 may also be referred to as a brake disc.

The carrier 30 may be fixedly mounted to the vehicle. For example, the carrier 30 may be connected to an axle or steering knuckle via an intermediate component, such as a torque plate, in one or more embodiments. The carrier 30 may receive and/or support the first and second brake pad assemblies 24, 26 and may include an opening 90 that may be configured to receive at least a portion of the rotor 28.

The carrier 30 may straddle and may be spaced apart from the rotor 28. The carrier 30 may position the first and second brake pad assemblies 24, 26 on opposite sides of the rotor 28. The first brake pad assembly 24 may be disposed proximate an inboard side or first side 32 of the rotor 28. The second pad assembly 26 may be disposed proximate an outboard side or second side 34 of the rotor 28.

The carrier 30 may help maintain a first adjustable predetermined gap or first running clearance 92 between the first brake pad assembly 24 and the first side 32 of the rotor 28. The carrier 30 may also help maintain a second adjustable predetermined gap or second running clearance 94 between the second brake pad assembly 26 and the second side 34 of the rotor 28. The first running clearance 92 may be determined or measured when the first brake pad assembly 24 is in the first retracted position. The second running clearance 94 may be determined or measured when the second brake pad assembly 26 is in the second retracted position. The first running clearance 92 plus the second running clearance 94 is defined as the total running clearance.

The first retracted position and the second retracted position of the first and second brake pad assemblies 24, 26 may refer to the initial positions of the first brake pad assembly 24 and the second brake pad assembly 26, respectively, relative to the rotor 28 prior to actuation as shown in Figure 2a. The first running clearance 92 may define a first actuation distance of the first brake pad assembly 24 from the first retracted position to the first extended position in which the first brake pad assembly 24 may engage the first side 32 of the rotor 28. The second running clearance 94 may define a second actuation distance of the second brake pad assembly 26 from the second retracted position to the second extended position in which the second brake pad assembly 26 may engage the second side 34 of the rotor 28.

The engagement of the first and second brake pad assemblies 24, 26 with the first and second sides 32, 34 of the rotor 28, respectively, may provide a clamping force that may retard rotation or the rotary motion of the rotor 28 about a rotor axis. Retarding rotary motion of the rotor 28 may slow or stop rotation of an associated vehicle wheel.

In at least one embodiment, the first and second brake pad assemblies 24, 26 may have similar or identical configurations. The first and second brake pad assemblies 24, 26 may each include a backplate 100 and a friction material 102.

The backplate 100 may be a structural member of a brake pad assembly 24, 26. The backplate 100 may be made of any suitable material, such as a metal or metal alloy. As the first and second brake pad assemblies 24, 26 are actuated, the piston assembly 60 may engage or exert force on a surface of the backplate 100 disposed opposite the friction material 102.

The friction material 102 may be fixedly disposed on a surface of the backplate 100. The friction material 102 may face toward and be spaced apart from the rotor 28 when the first and second brake pad assemblies 24, 26 are in their first and second retracted positions prior to actuation. The friction material 102 may engage the rotor 28 during vehicle braking, such as when the first and second brake pad assemblies 24, 26 are actuated to the first and second extended positions, respectively.

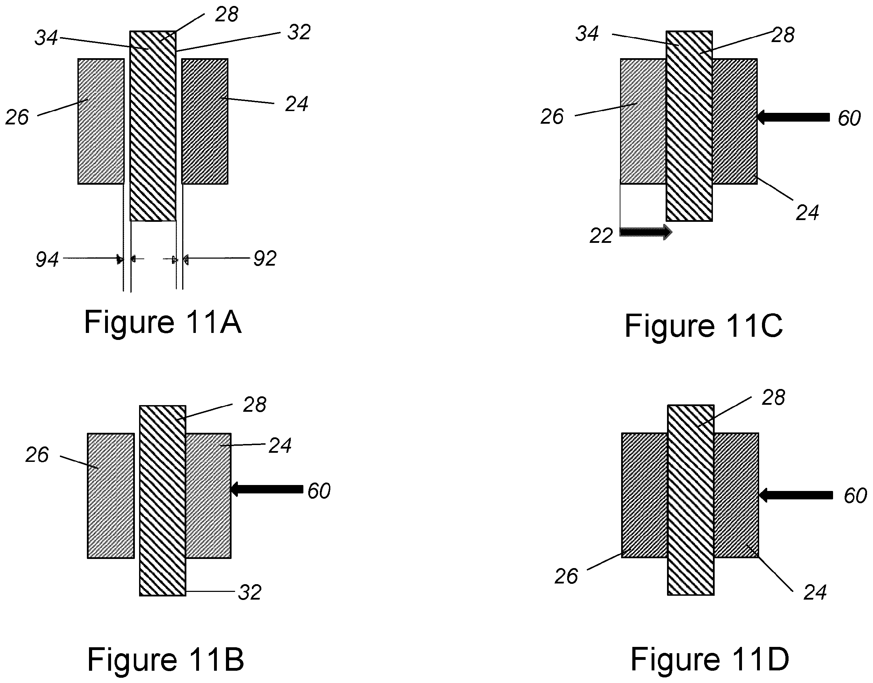

A braking operation is illustrated schematically in Figures 11A to 11D. In Figure 11A, there is a first running clearance 92 between the first brake pad assembly 24 and the first side 32 of the rotor 28 and a second running clearance 94 between the second brake pad assembly 26 and the second side 34 of the rotor 28. As illustrated by Figure 11B, the piston assembly 60 may actuate the first brake pad assembly 24 into engagement with the rotor 28. Figure 11C illustrates the second brake pad assembly 26 being actuated indirectly into engagement with the rotor 28. For example, the piston assembly 60 may translate the first brake pad assembly 24 toward the first side 32 of the rotor 28 such that the first brake pad assembly 24 engages the first side 32 of the rotor 28. In reaction to the engagement of the first brake pad assembly 24 with the first side 32 of the rotor 28, the caliper housing 20 may then translate via the caliper bridge 22 and slide pin assembly 80 to actuate the second brake pad assembly 26 into engagement with the second side 34 of the rotor 28. Figure 11D shows both the first brake pad assembly 24 and the second brake pad assembly 26 in contact with the rotor 28. There are no longer first and second running clearances 92, 94.

As shown most clearly in Figures 2A and 2B, in this embodiment, the piston assembly 60 includes a piston housing 110, a piston 112, a piston head 114, a bushing 116, and a tappet 118. The piston housing 110 is disposed proximate the caliper housing 20 and the caliper bridge 22. The piston housing 110 acts as a guide member for various piston assembly components. The piston housing 110 includes a guide located on either side of an aperture of the piston housing 110 that may receive the piston assembly 60. The piston housing 110 may move in unison with the piston assembly 60 during brake application and release; however, it is also contemplated that the piston housing 110 and piston assembly 60 may move relative to each other during brake application and release. The piston assembly 60 is shown as having a dual piston configuration; however, a greater or lesser number of pistons may be provided.

The piston head 114 is disposed on an end portion of the piston 112 and has a tri-lobular external surface that is received within the bushing 116 such that the piston 112 is axially guided by the bushing 116. In this embodiment, the piston 112 is provided with a threaded internal bore that is arranged to receive the tappet 118 having a corresponding external thread.

The piston assembly 60 slides along the slide pins 82, 84 when force is applied by the actuator 40 to rotate the operating shaft 50. Braking force is transmitted via the piston head 114 to the first brake pad assembly 24. The piston housing 110 moves along or substantially parallel to an axis 86 toward the rotor 28 together with the piston assembly 60 during brake application. This movement of the piston housing 110 and piston assembly 60 translates the first brake pad assembly 24 from the first retracted position towards the first extended position and may ultimately lead to the translation or actuation of the second brake pad assembly 26 from the second retracted position towards the second extended position as previously discussed.

The first and second brake pad assemblies 24, 26 translate from their respective extended positions to their retracted positions after a braking operation, during brake release. The first and second brake pad assemblies 24, 26 are released and translate towards their initial retraced positions by reducing the input force applied to the operating shaft 50 by the actuator 40. This reduction in input force reduces the clamping force applied by the first and second brake pad assemblies 24, 26 to the rotor 28. The reduction in the clamping force may be the result of a partial or complete release of a vehicle brake pedal by the operator.

In this embodiment, an adjuster mechanism 120 is configured to adjust the first extended position of the first brake pad assembly 24 and/or the second extended position of the second brake pad assembly 26 to compensate for wear of the friction material 102 during operation. The adjuster mechanism 120 is disposed proximate the piston housing 110 and the piston assembly 60. In addition, the adjuster mechanism 120 is disposed proximate and is operatively connected to the operating shaft 50 via a drive pin 130. In this embodiment, the drive pin 130 has a generally spherical or ball-shaped end. The adjuster mechanism 120 includes a return spring 122, an adjuster shaft 124, a gear assembly 126, and a manual adjuster shaft 128.

In this embodiment, the return spring 122 is disposed proximate and extends around the adjuster shaft 124. The return spring 122 is configured to exert a return force that biases the piston assembly 60 and the operating shaft 50 towards a retracted position when the actuator 40 is released. In this embodiment, the piston assembly 60 further comprises a return plate 132. The return plate 132 surrounds the pistons 122 and the adjuster mechanism 120 and is engaged by the return spring 122. Accordingly, after brake release, the return force provided by the return spring 122 urges the return plate 132 away from the rotor 28 to assist in returning the first and second brake pad assemblies 24, 26 towards their respective retracted positions.

The adjuster mechanism 120 is configured to adjust a length of the piston assembly 60 to maintain an actuation distance or running clearance between the first and/or second brake pad assemblies 24, 26 and the rotor 28. The actuation distance of the first brake pad assembly 24 corresponds to the first running clearance 92 between the first brake pad assembly 24 and the first side 32 of the rotor 28. The actuation distance of the second brake pad assembly 24 corresponds to the second running clearance 94 between the second brake pad assembly 26 and the second side 34 of the rotor 28. The actuation distance or running clearances 92, 94 increase as the friction material 102 and/or rotor 28 wears during operation. The adjuster mechanism 120 attempts to adjust the running clearance to be within a predetermined tolerance. The adjuster mechanism 120 attempts to adjust an overall length of the piston assembly 60 when the first brake pad assembly 24 is in the first extended position or moves to the first extended position and/or the second brake pad assembly 26 is in the second extended position or moves to the second extended position.

There is relative motion between the piston housing 110 and the piston assembly 60 during a wear adjustment. For example, the piston housing 110 may remain stationary relative to the caliper housing 20 while the piston assembly 60 may extend or retract relative to the caliper housing 20.

As the actuating lever 42 of the actuator 40 moves forward, the operating shaft 50 rotates. This motion of the actuating lever 42 of the actuator 40 and/or operating shaft 50 is typically referred to as a stroke. The stroke of the actuating lever 42 of the actuator 40 or the operating shaft 50 varies in response to the current wear state of the first and second brake pad assemblies 24, 26. For example, as the friction material 102 and/or the rotor 28 wears, the first and second running clearances 92, 94 increases. The increase in the first and second running clearances 92, 94 increases the angular rotation distance or the stroke of the operating shaft 50 to engage the first and second brake pad assemblies 24, 26 with the rotor 28.

As the operating shaft 50 rotates, the piston assembly 60 translates the first brake pad assembly 24 towards the first side 32 of the rotor 28. The drive pin 130, which is drivably connected to the adjuster mechanism 120, begins to contact a drive mechanism disposed proximate an end of the adjuster shaft 124. As the operating shaft 50 further rotates, the drive pin 130 begins to rotate the adjuster shaft 124.

The adjuster mechanism 120 is operatively connected to the manual adjuster shaft 128 by an intermediate gear 140 that is configured to rotate the manual adjuster shaft 128. As the tappet 118 rotates, the manual adjuster shaft 128 rotates as the length of the piston assembly 60 is extended or retracted.

As the tappet 118 is rotated, the piston 112 winds out from the piston housing 110, thus lengthening the piston assembly and adjusting the at least one extended position. As the piston 112 is wound out of the piston housing 110, the piston head 114 engages the backplate 100 of the first brake pad assembly 24. The rotation of the operating shaft 50 results in the translation of the first brake pad assembly 24 from the first retracted position towards the first extended position in which the first brake pad assembly 24 engages the first side 32 of the rotor 28.

In response to the first and second brake pad assemblies 24, 26 contacting the rotor 28, the resulting clamping force increases the thread friction between the tappet 118 and piston 112. This increase in the thread friction increases the torque required to turn the tappet 118, which inhibits the piston 112 and tappet 118 from rotating relative to each other. The increased torque required to turn the tappet 118 causes a clutch pack within the gear assembly 126 to slip, preventing further adjustment of the length of the piston assembly 60. The adjuster mechanism 120 is then inhibited from winding back during the return stroke of the operating shaft 50 to its initial position. The adjuster shaft 124 remains in constant meshing engagement with the tappet 118 and the tappet 118 remains in constant mesh with the manual adjuster shaft 128.

A wear sensor arm 142 is in threaded engagement with the manual adjuster shaft 128. The wear sensor arm 142 and manual adjuster shaft 128 have corresponding threads such that the wear sensor arm 142 is configured to traverse the threads disposed on the outside of the manual adjuster shaft 128 as the adjuster mechanism 120 rotates and adjusts the extended positions of the first and second brake pad assemblies 24, 26. The manual adjuster shaft 128 rotates in response to rotation of the tappet 118 during wear adjustment, thus resulting in the wear sensor arm 142 traversing the threads.

The wear sensor arm 142 is rotatably fixed relative to the caliper housing 20 or carrier 30 such that as the manual adjuster shaft 128 rotates, the wear sensor arm 142 will index along the length of the manual adjuster shaft 128. In other words, as the manual adjuster shaft 128 rotates, it causes linear axial translation of the wear sensor arm 142. The amount of linear axial translation of the wear sensor arm, i.e., the amount of axial displacement of the wear sensor arm 142 is indicative of the total amount of adjustment or change in the extended position of at least the first brake pad assembly 24 made by the adjuster mechanism 120.

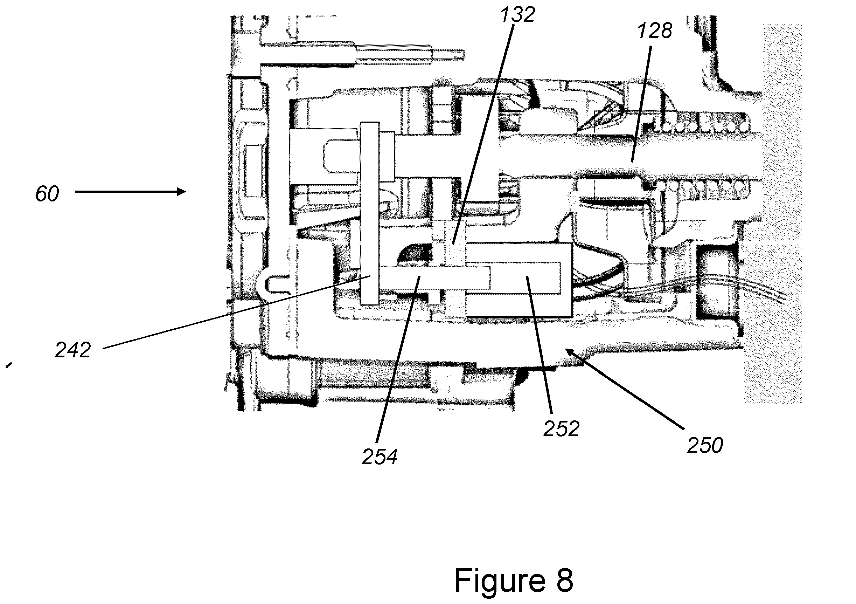

The movement of the wear sensor arm 142 is detected by a sensor arrangement 150. In this embodiment, the wear sensor arm 142 contacts an actuating member of a sensor arrangement 150. In this embodiment, the actuating member is a plunger 154 that is received by the sensor arrangement 150. As well as the wear sensor arm 142 being prevented from rotating within the carrier 30 or caliper housing 20 as adjustment of the brake mechanism occurs, the sensor arrangement 150 is fixed relative to the caliper housing 20. Therefore, as the caliper housing 20 moves relative to the carrier 30 during adjustment or actuation of the brake assembly 10, the sensor arrangement 150 moves with the caliper housing 20. In an alternative embodiment, shown in Figure 8 and described in more detail below, the sensor arrangement 150 is fixed relative to the return plate 132.

The first or second running clearances 92, 94 may be adjusted to be within a predetermined operating margin to assure effective operation of the brake assembly 10. When the first and second running clearances 92, 94 are within a predetermined operating margin, a predetermined stroke or angular rotation of the operating shaft 50 may help provide effective engagement of the first and second brake pad assemblies 24, 26 with the rotor 28. Should the first or second running clearances 92, 94 not be within the predetermined running clearance, the stroke of the actuating lever 42 or operating shaft 50 may not be within a predetermined operating margin, which may affect brake performance.

In this embodiment, the sensor arrangement 150 is provided with a first sensor 152 disposed within the caliper housing 20 and proximate the adjuster mechanism 120. The first sensor 152 detects the movement of the plunger 154. In this embodiment, the first sensor 152 is in contact with the plunger 154, which extends from a first end of the sensor arrangement 150. As the plunger 154 actuates in response to movement of the wear sensor arm 142, the first sensor 152 detects or provides data or a first signal indicative of an amount of wear of the first and second brake pad assemblies 24, 26 and/or the rotor 28 by monitoring a change in the first extended position of the first brake pad assembly 24 and/or a change in the second extended position of the second brake pad assembly 26. In other words, the first sensor 152 detects the total amount of adjustment made by the adjuster mechanism 120 via the wear sensor arm 142 as the first and second brake pad assemblies 24, 26 move from their retracted positions towards their extended positions. For example, when the adjuster mechanism 120 adjusts the first extended position of the first brake pad assembly 24 and the first extended position of the second brake pad assembly 26 in response to wear of the friction material 102 of the first brake pad assembly 24 and the second brake pad assembly 26, this results in a change in the position of the wear sensor arm 142 along the manual adjuster shaft 128. The position of the wear sensor arm 142 therefore indicates the total wear within the brake assembly 10, i.e., the wear of the friction material 102 of the first brake pad assembly 24, plus the wear of the friction material 102 of the second brake pad assembly 26, plus the wear of the first and second sides 32, 34 of the rotor 28.

Therefore, the first sensor 152 provides a first signal (e.g. an output voltage) that is transmitted to the EBS, which can convert the signal into an indication of the total wear of the first and second brake pad assemblies 24, 26 and the rotor 28. However, it should be noted that the total running clearance cannot be determined from the first signal of the first sensor 152 alone. Therefore, in this embodiment, the sensor arrangement 150 is also configured to detect the movement of a component of the piston assembly 60 in the direction of the axis 86 (i.e., the axial direction) to indicate the displacement of the component of the piston assembly 60 during a braking operation. As discussed in more detail below, by detecting this movement, the total running clearance within the brake can be calculated.

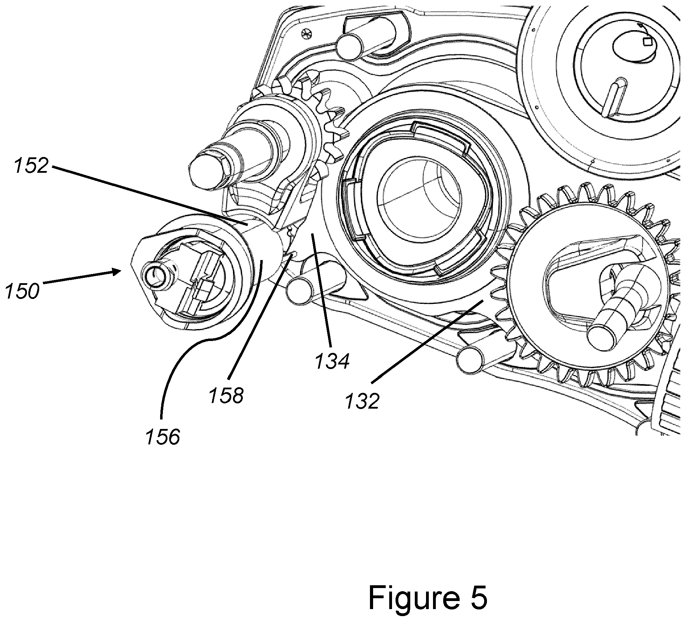

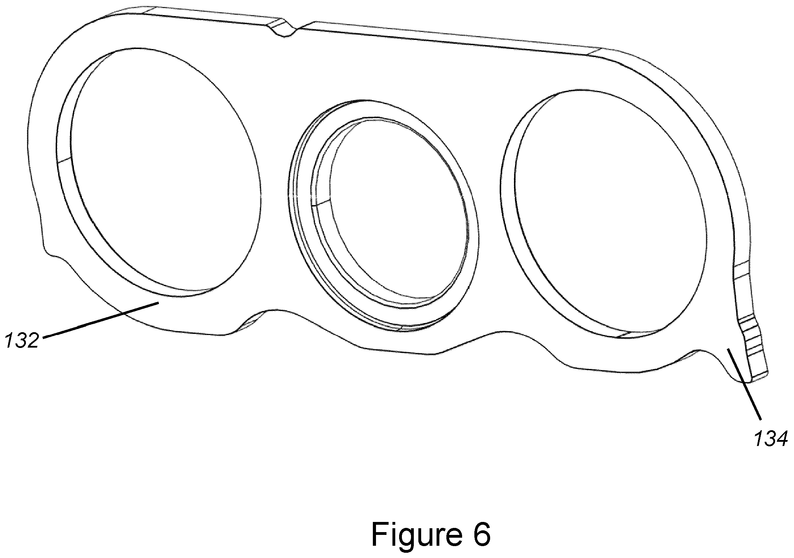

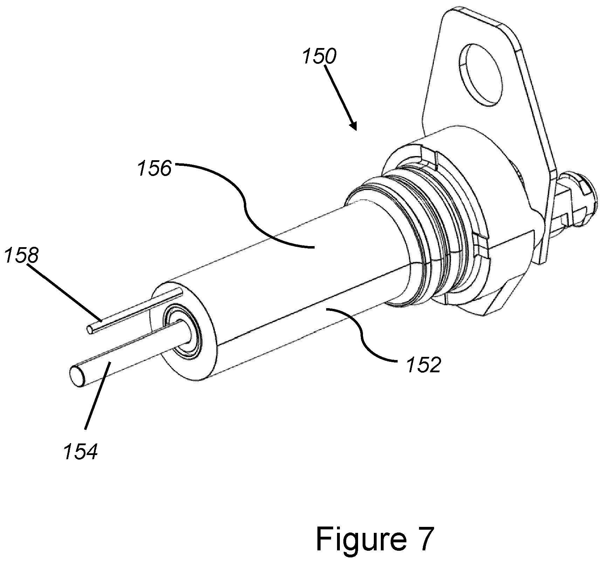

As shown most clearly in Figures 5 and 7, in this embodiment, to detect the movement of the component of the piston assembly 60, the sensor arrangement 150 further comprises a second sensor 156 configured to detect a second actuating member. In this embodiment, the second actuating member is a second plunger 158. The sensor arrangement 150 is configured to detect the movement of the component of the piston assembly 60 in the direction of the axis 86 (i.e., the axial direction) to indicate the displacement of the component of the piston assembly 60 during a braking operation. In this embodiment, the component of the piston assembly 60 that is detected is the return plate 132, though it will be appreciated that any suitable component of the piston assembly 60 could be detected. In this embodiment, the return plate 132 includes a projection configured to be detected by the sensor arrangement 150. Specifically, in this embodiment, the projection is in the form of a lug 134. As shown most clearly in Figure 6, the lug 134 is located at a corner of the return plate 132. Such a location is advantageously proximate the second plunger 158 of the sensor arrangement 150 such that the second plunger 158 can engage the lug 134. Therefore, as the return plate 132 moves in the axial direction towards and away from the rotor 28, the second plunger 158 actuates accordingly. The actuation of the second plunger 158 can be detected by the second sensor 156, indicating the displacement of the return plate 132 during a brake application operation. Advantageously, the location of the lug 134 and second plunger 158 is a location that is not normally utilised in disc brake assemblies 10. Further, the first sensor 152, second sensor 156, first plunger 154 and second plunger 158 can all be located in a common housing of the sensor arrangement 150 (e.g., as shown in Figure 7). This is an efficient use of space with the disc brake assembly 10 and can easily be retrofitted to existing brake assemblies 10. This is particularly useful for existing brake assemblies that already include a sensor arrangement 150 incorporating a first sensor, for example in the form of a linear potentiometer. By incorporating a second sensor 156 within the body of the existing sensor arrangement - for example, by packaging the second sensor 156 within the body of the existing CWS - the footprint of the sensor is only minimally increased. The return plate 132 simply needs to be replaced. Modification of other components within the brake assembly 10 is not necessary and the risk of interference of the sensor arrangement 150 with proper operation of the brake assembly 10 is minimised.

In an alternative embodiment, shown in Figure 8, an alternative sensor arrangement 250 is provided. In this embodiment, features that differ to the previous embodiment are indicated with the same numbering as the previous embodiment, but with the prefix "2".

In this alternative embodiment, rather than being fixed relative to the caliper housing 20, the sensor arrangement 250 is fixed relative to a component of the piston assembly 60. Specifically, in this embodiment, the sensor arrangement 250 is fixed to the return plate 132 of the piston assembly 60. Therefore, as the component of the piston assembly, in this case the return plate 132, actuates towards and away from the rotor 28 during the braking operation, the sensor arrangement 250 moves together with the return plate 132.

In this embodiment, a wear sensor arm 242 is also provided that functions substantially in the same way as the wear sensor arm 142 of the previous embodiment. The wear sensor arm 242 is in threaded engagement with the manual adjuster shaft 128. As the manual adjuster shaft 128 rotates in response to rotation of the tappet 118 during wear adjustment, the wear sensor arm 242 traverses the threads and indexes along the length of the manual adjuster shaft 128. The amount of linear axial translation of the wear sensor arm 242, i.e., the amount of axial displacement of the wear sensor arm 242, is indicative of the total amount of adjustment or change in the extended position of at least the first brake pad assembly 24 made by the adjuster mechanism 120.

The movement of the wear sensor arm 242 is detected by the sensor arrangement 250. In this embodiment, the wear sensor arm 242 is fixed relative to an actuating member that is received in the sensor arrangement 250. In this embodiment, the actuating member is a plunger 254 that is fixed to the wear sensor arm 242 and received by the sensor arrangement 250.

In this embodiment, the sensor arrangement includes a single sensor 252. The sensor 252 is configured to detect the movement of the actuating member, in this case the plunger 254. As the plunger 254 moves due to the traversal of the wear sensor arm 242 along the manual adjuster shaft 128, the sensor 252 detects this movement and provides data or a signal indicating the position of the adjuster mechanism 120. This information can be utilised by the EBS to indicate the total wear of the inboard brake pad, the outboard brake pad and the rotor of the brake.

As the plunger 254 is fixed relative to the wear sensor arm 242, and the sensor arrangement 250 is fixed relative to the component of the piston assembly, e.g., the return plate 132, as the return plate 132 actuates during actuation of the brake assembly 10, the plunger 254 also moves relative to the sensor arrangement 250. As the plunger 254 is received in the sensor arrangement 250, the sensor 252 also detects movement of the plunger 254 due to actuation of the brake assembly 10. More specifically, the sensor 252 detects the axial movement of the return plate 132 and provides data or a signal indicating the position of the return plate 132. As will be described in more detail below, this information can be used to calculate the total running clearance of the brake.

The information provided can be used to track the displacement of the component of the piston assembly, e.g., the return plate 132. By also obtaining data indicating the input force or pressure applied during the braking operation, the amount of displacement of the component that occurs before the friction material 102 of the first brake pad assembly 24 and second brake pad assembly 26 are both contacting the rotor 28 can be calculated. This displacement can be used to calculate the total running clearance within the brake. Data indicating the input force applied or pressure applied during the braking operation can be relatively easily obtained. Such data is typically monitored and recorded on vehicles and can be accessed with permission from the original equipment manufacturer. For example, air pressure applied is typically recorded in an electronic braking system modulator for vehicles with an EBS.

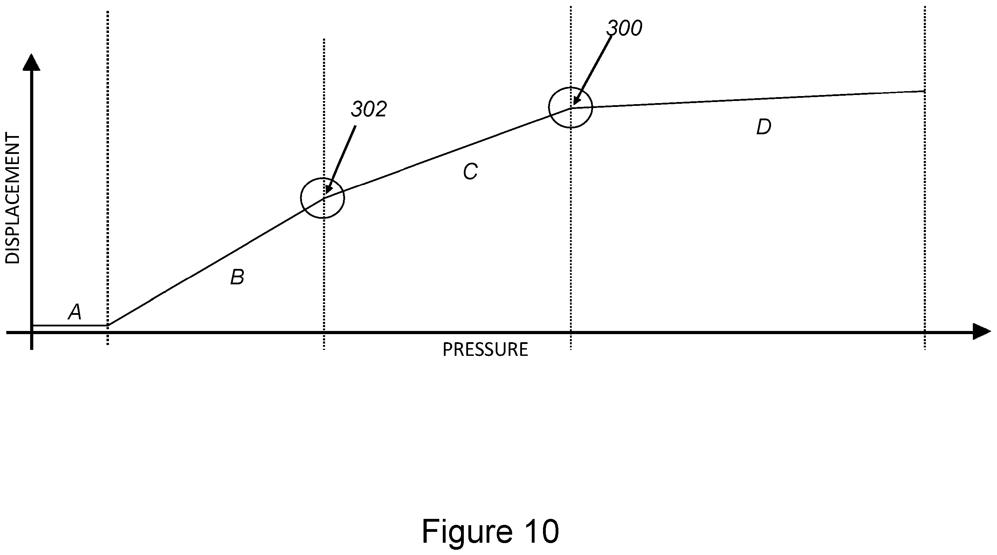

A method calculating the running clearance of a disc brake is therefore as follows. Firstly, the data indicating the input force and/or pressure applied during the braking operation can be plotted on a graph against the change in displacement of the component of the piston assembly. An example of such a graph can be seen in Figure 10. The y-axis shows the displacement of the return plate 132. The x-axis shows the pressure applied during actuation of the disc brake. As can be seen, the graph has four main stages, which will now be described.

In the first stage, labelled as A, it can be seen that the brake is starting to be applied as the pressure is increasing. However, the piston arrangement 60 is not yet moving and so has not yet contacted the first brake pad assembly 24. This stage corresponds to the situation shown in Figure 11A, where there is still an inboard running clearance 92 as well as an outboard running clearance 94.

In the second stage, labelled as B, it can be seen that the pressure keeps increasing but now the displacement also increases. This corresponds to Figure 11B, where the piston arrangement 60 has now moved and has contacted the first brake pad assembly 24 to urge it towards the rotor 28. The pressure required to do this is relatively low, as there is no real resistance; there is simply an air gap to take up. In Figure 11B, the first running clearance 92 is now zero, as the first brake pad assembly 24 is contacting the first side 32 of the rotor 28.

In the third stage, labelled as C, it can be seen that the pressure keeps increasing, as does the displacement, but the displacement increases at a slightly lower rate. This corresponds to Figure 11C, where the caliper bridge 22 has slid relative to the carrier 30 to bring the second brake pad assembly 26 into contact with the second side 34 of the rotor 28. The pressure required to do this is still relatively low, as the slide pin assembly 80 is low friction, so again there is not significant resistance. In Figure 11C, the second running clearance 94 is now zero, as the second brake pad assembly 26 is contacting the second side 34 of the rotor 28.

In the fourth stage, labelled as D, it can be seen that the pressure keeps increasing, as does the displacement, but the displacement increases at a significantly lower rate, almost zero. This is because the first brake pad assembly 24 and the second brake pad assembly 26 are now in contact with the rotor 28. This provides a large resistance, so the pressure continues to increase. The small displacement that does occur is due to factors such as pad compression and frame stretch.

Broadly speaking, stages B and C represent an adjustment phase. If the first running clearance 92 or the second running clearance 94 are too large, the adjuster mechanism 120 will function as described above, in order to reduce the first running clearance 92 and the second running clearance 94 to an acceptable level for the next operation of the brake. Stage C represents a sliding phase when the caliper bridge 22 is sliding relative to the carrier 30. Stage D represents a clamping phase when the first brake pad assembly 24 and the second brake pad assembly 26 are in contact with the rotor 28, to slow a vehicle.

Between stages C and D is a knee point 300. At the knee point 300, the change in gradient is indicative of the friction material 102 of the first brake pad assembly 24 and the friction material 102 of the second brake pad assembly 26 both being in contact with the first and second sides 32, 34 of the rotor 28. In the method, once this knee point 300 is identified, the displacement of the return plate 132 at this point can be calculated. This displacement can then be used to calculate the total running clearance of the brake assembly 10. This total running clearance is indicative of the current condition of the brake assembly 10, enabling a more accurate assessment to be made of the wear of the various components of the brake assembly. For example, if the total running clearance is too high, this could be a sign that there is a risk of reduced brake performance. Alternatively, if the total running clearance is too low, this could be a sign that one of the brake pads is dragging on the rotor between braking operations, reducing efficiency and potentially indicating a long-term safety issue. Based on the information provided, the brake monitoring system can make adjustments to account for the specific wear over the life of the brake.

In the example shown in Figure 10, there is also a knee point 302 between stages B and C. The knee point 302 can be defined as a second knee point and the knee point 300 can be defined as a first knee point. At the knee point 302, the change in gradient is indicative of only the friction material 102 of the first brake pad assembly 24 being in contact with the first side 32 of the rotor 28. This is because, although only very small, the friction between the slide pin assembly 80 and the caliper housing 20 may cause a detectable change in gradient during the sliding phase. In the method, once this knee point 302 is identified, the displacement of the return plate 132 at this point can be calculated. This displacement can then be used to calculate the first running clearance 92 of the brake assembly 10 only, which can also be useful information. For example, if the first running clearance 92 was much smaller than the second running clearance 94, this could indicate a problem with the sliding phase.

The method can be verified by performing a testing process where a plurality of braking operations are made. During the testing process, a plurality of physical measurements of the total running clearance as well as the first and second running clearances inboard and outboard are made during the plurality of brake operations. Suitable methods to make the physical measurements are known in the art. The physical measurements of the running clearances can be compared to the calculated total running clearance, first running clearance and second running clearance to verify the accuracy of the calculated running clearance. The physical measurements obtained during the testing process can be stored in a controller of a brake monitoring system and compared to the live data. This can produce a 'knee point detection algorithm' that can be used during the life of a brake to identify the knee points 300, 302. During testing, if the calculated running clearance does not match the physical measurements of the running clearance, the knee point detection algorithm can be adjusted accordingly, to reflect the physical measurements more accurately.

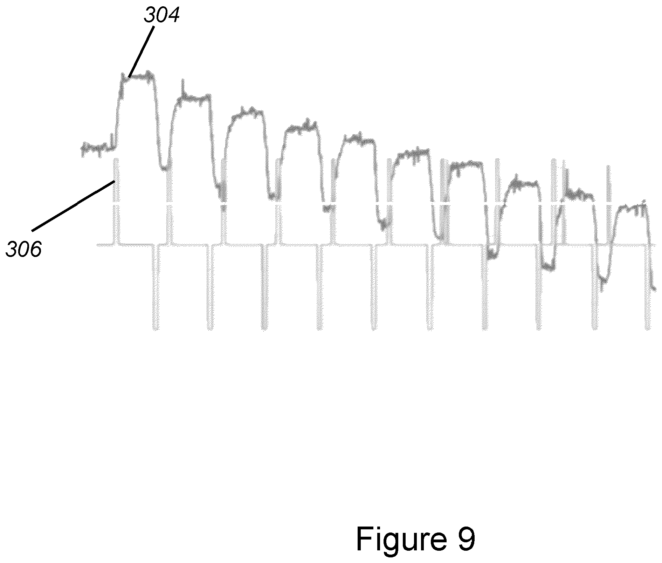

For the sensor arrangement 250, the method functions substantially the same as that described in relation to Figure 10, except the single sensor 252 can detect the displacement of the return plate 132 as well as the displacement of the wear sensor arm 242. This displacement is plotted on an example graph in Figure 9, the displacement of the return plate 132 being shown by 302 and the displacement of the wear sensor arm 242 being shown by 304. As will be appreciated, over the life of the brake, the start point of the return plate 132 will change as the disc brake is adjusted. This can be seen in the graph of Figure 10. The difference between the displacement of the return plate 132 and the displacement of the wear sensor arm 242 can be plotted live to calculate the total running clearance, using a similar knee point detection algorithm as described above.

The brake monitoring system may include a controller that may communicate with the sensor arrangements 150, 250. In at least one embodiment, the brake monitoring system may communicate with or may be an electronic braking system (EBS), anti-lock braking system (ABS), or an overall vehicle telematics system. The brake monitoring system may receive brake wear information and may perform adaptive brake utilization to balance the wear state of the brake pad assemblies.

The brake monitoring system may receive a first signal from the sensor arrangements 150, 250 and calculate or determine the change in the first extended position that may occur during a brake cycle and may compare the change in the first extended position to a first threshold. The first threshold or first threshold value may represent or be indicative of an amount of friction material wear at which inspection and/or replacement of first brake pad assembly 24 and/or the second brake pad assembly 26 may be desired. The first threshold may be a predetermined value that may be based on vehicle development testing. An audible, visual, or tactile warning or warning that is combinations thereof may be provided to a vehicle operator when the change in the first extended position exceeds the first threshold. A warning may not be provided to a vehicle operator when the change in the first extended position does not exceed the first threshold.

The sensors 152, 156, 252 may be of any suitable type and may be configured to directly or indirectly detect the positions of the wear sensor arm 142, 242 and the component of the piston assembly. The sensors 152, 156, 252 may be a non-contact sensor or a contact sensor. Examples of a contact configuration are the embodiments described above. In these embodiments, the sensors 152, 156, 252 are variable resistance sensors, such as linear potentiometers. The second sensor 156 of the sensor arrangement 150 may be a Linear Variable Differential Transformer (LVDT), as such a compact sensor is particularly suited to being located in the same housing as linear potentiometers typically used in continuous wear sensors as known in the art. In embodiments having linear potentiometers, they are each in communication with a plunger 154, 158, 254 that makes physical contact with the component that is being detected.

In a non-contact configuration, the sensors 152, 156, 252 may be spaced apart from and may not contact the wear sensor arm 142, 242 and the component of the piston assembly. In such a non-contact configuration, the wear sensor arm 142, 242 and the component of the piston assembly may be detected in any suitable manner, including but not limited to acoustically, capacitively, inductively, optically, magnetically, or combinations thereof. For instance, the wear sensor arm 142, 242 and the component of the piston assembly may be configured as a magnet that may actuate be detected by the sensors 152, 156, 252. For instance, the magnetic field created by the magnet may attract a moveable feature of the sensor, such as an arm that may be operatively connected to a sliding contact of the sensor. Movement of the sliding contact may alter the effective length of a conductor of the sensor. As another example, a membrane potentiometer may have a conductive membrane that may be deformed by the magnetic field of the magnet or actuated in response to the magnetic field generated by the magnet and thus may be used to sense the position of the wear sensor arm 142, 242 and the component of the piston assembly.

In other alternatives, the sensors 152, 156, 252 may include wireless receivers configured to receive wireless signals from transmitters located on the wear sensor arm 142, 242 and the component of the piston assembly to determine their position.

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the invention.

## Claims

1. A method of calculating the total running clearance of a disc brake having inboard and outboard brake pads (24, 26) arranged to contact a rotor (28) during a braking operation, wherein a piston assembly (60) is configured to actuate the inboard brake pad (24) of the disc brake, the method including:
detecting the axial movement of a component of the piston assembly (60) to provide data indicating the displacement of the component of the piston assembly (60) during the braking operation; and
determining the amount of displacement of the component of the piston assembly (60) that occurs before the inboard brake pad (24) and the outboard brake pad (26) are both contacting the rotor (28) to provide a calculated total running clearance.

2. The method of claim 1, wherein determining the amount of displacement of the component of the piston assembly (60) that occurs before the inboard brake pad (24) and the outboard brake pad (26) are both contacting the rotor (28) comprises:
obtaining data indicating the input force applied and/or the pressure applied during the braking operation; and
comparing the change in displacement of the component of the piston assembly (60) during the braking operation to the input force and/or to the pressure applied during the braking operation.

3. The method of claim 2, wherein determining the amount of displacement of the component of the piston assembly (60) that has occurred before the inboard brake pad (24) and the outboard brake pad (26) are both contacting the rotor (28) comprises plotting on a graph the change in displacement of the component of the piston assembly (60) during the braking operation against the input force and/or the pressure applied during the braking operation and using a knee point detection algorithm to identify a knee point (300) of the graph, defined by a change in the gradient of the graph indicating that the inboard brake pad (24) and the outboard brake pad (26) are contacting the rotor (28).

4. The method of claim 3, comprising determining the amount of displacement of the component of the piston assembly (60) that has occurred before the inboard brake pad (24) is contacting the rotor (28) by plotting on a graph the change in displacement of the component of the piston assembly (60) during the braking operation against the input force and/or the pressure applied during the braking operation and using a knee point detection algorithm to identify a second knee point (302) of the graph, defined by a change in the gradient of the graph indicating that the inboard brake pad (24) is contacting the rotor (28), wherein the knee point of the graph defined by a change in the gradient of the graph indicating that the inboard brake pad and the outboard brake pad are contacting the rotor is a first knee point (300).

5. A brake assembly (10) for a disc brake, the brake assembly (10) comprising:
a caliper housing (20);
a piston assembly (60) moveably disposed within the caliper housing (20) and configured to actuate a first brake pad assembly (24) in the axial direction of a brake rotor (28) from a first retracted position to a first extended position during a braking operation;
a sensor arrangement (150) configured to detect the position of a component of the piston assembly (60) to indicate the displacement of the component of the piston assembly (60) in the axial direction during the braking operation; **characterized by** an adjuster mechanism (120) that is operatively connected to the piston assembly (60) and is configured to adjust the first extended position to ensure an acceptable total running clearance between the first brake pad assembly (24) and the rotor and a second brake pad assembly (26) and the rotor (28),
wherein the sensor arrangement (150) is fixed relative to the caliper housing (20) such that there is relative movement between the sensor arrangement (150) and the component of the piston assembly (60) during the braking operation,
wherein the sensor arrangement (150) comprises a first sensor (152) and a second sensor (156), wherein the first sensor (152) is configured to detect a position of the adjuster mechanism (120) to determine the total wear and the second sensor (156) is configured to detect the displacement of the component of the piston assembly (60) in the axial direction.

6. The brake assembly (10) of claim 5, wherein the sensor arrangement (150) further comprises:
a wear sensor arm (142) in communication with the adjuster mechanism (120), the wear sensor arm (142) being configured to displace relative to the caliper housing (20) in the axial direction as the adjuster mechanism (120) adjusts the first extended position of the piston assembly (60),
wherein the first sensor (152) is in communication with the wear sensor arm (142) to detect the displacement of the wear sensor arm (142) in the axial direction and the second sensor (156) is in communication with the component of the piston assembly (60) to detect the displacement of the component of the piston assembly (60) in the axial direction.

7. The brake assembly (10) of claim 6, wherein:
the wear sensor arm (142) is configured such that as the wear sensor arm (142) displaces, the wear sensor arm (142) actuates a first actuating member (154) of the sensor arrangement (150), wherein the first sensor (152) is configured to detect the actuation of the actuating member (154); and
the component of the piston assembly (60) is configured such that as the component of the piston assembly (60) displaces, the component of the piston assembly (60) actuates a second actuating member (158) of the sensor arrangement (150, 250), wherein the second sensor (156) is configured to detect the movement of the second actuating member (158),
optionally wherein the first actuating member (154) is a first plunger that is received by the first sensor (152) and the second actuating member (158) is a second plunger that is received by the second sensor (156).

8. The brake assembly (10) of any of claims 5 to 7, wherein the first sensor (152) and the second sensor (156) are located in a common housing that is fixed relative to the caliper housing (20).

9. A brake assembly (10) for a disc brake, the brake assembly (10) comprising:
a caliper housing (20);
a piston assembly (60) moveably disposed within the caliper housing (20) and configured to actuate a first brake pad assembly (24) in the axial direction of a brake rotor (28) from a first retracted position to a first extended position during a braking operation; and
a sensor arrangement (250) configured to detect the position of a component of the piston assembly (60) to indicate the displacement of the component of the piston assembly (60) in the axial direction during the braking operation,
**characterized in that**
the sensor arrangement (250) is fixed relative to the component of the piston assembly (60) such that the sensor arrangement (250) is displaced together with the component of the piston assembly (60) in the axial direction during the braking operation,
wherein the sensor arrangement (250) comprises a single sensor (252) configured to detect:
a position of the adjuster mechanism (120) to determine the total wear; and
the displacement of the component of the piston assembly (60) in the axial direction.

10. The brake assembly (10) of claim 9, wherein the sensor arrangement (250) further comprises:
a wear sensor arm (242) in communication with the adjuster mechanism (120), the wear sensor arm (242) being configured to displace relative to the caliper housing (20) in the axial direction as the adjuster mechanism (120) adjusts the first extended position of the piston assembly (60),
wherein the sensor (252) is in communication with the wear sensor arm (242) to detect the displacement of the wear sensor arm (242) in the axial direction and the sensor (252) is also in communication with the component of the piston assembly (60) to detect the displacement of the component of the piston assembly (60) in the axial direction,
optionally wherein the sensor arrangement (250) further comprises an actuating member (254) fixed relative to the wear sensor arm (242) such that as the wear sensor arm (242) displaces, the actuating member (254) actuates, wherein the sensor (252) is configured to detect relative movement of the actuating member (254) and the sensor (252).

11. The brake assembly (10) of claim 10, wherein the actuating member is a plunger (254) that is received by the sensor (252).

12. The brake assembly (10) of any of claims 5 to 11, wherein the component of the piston assembly is a return plate (132) that actuates in an axial direction towards and away from the rotor (28) of the disc brake during the braking operation, such that the sensor arrangement (150, 250) is configured to detect the displacement of the return plate (132) in the axial direction.

13. The brake assembly (10) of any of claims 5 to 12, wherein the component of the piston assembly (60) comprises a projection (134) configured to be detected by the sensor arrangement (150, 250) to indicate the axial movement of the component of the piston assembly (60), to indicate the displacement of the component of the piston assembly (60) during a braking operation.

14. The brake assembly (10) of claim 13, wherein the component of the piston assembly (60) is a return plate (132) and the projection (134) is a lug in a corner of the return plate (132).

15. A controller configured to carry out the method of any of claims 1 to 5.

## Patentansprüche

1. Verfahren zum Berechnen des Gesamtlaufspiels einer Scheibenbremse, die einen inneren und einen äußeren Bremsbelag (24, 26) aufweist, die dazu eingerichtet sind, während eines Bremsvorgangs einen Rotor (28) zu berühren, wobei eine Kolbenanordnung (60) dazu konfiguriert ist, den inneren Bremsbelag (24) der Scheibenbremse zu betätigen, das Verfahren einschließend:
Erfassen der axialen Bewegung einer Komponente der Kolbenanordnung (60), um Daten bereitzustellen, die die Verschiebung der Komponente der Kolbenanordnung (60) während des Bremsvorgangs angeben; und
Bestimmen des Betrags der Verschiebung der Komponente der Kolbenanordnung (60), die auftritt, bevor sowohl der innere Bremsbelag (24) als auch der äußere Bremsbelag (26) den Rotor (28) berühren, um ein berechnetes Gesamtlaufspiel zu bereitzustellen.

2. Verfahren nach Anspruch 1, wobei das Bestimmen des Betrags der Verschiebung der Komponente der Kolbenanordnung (60), die auftritt, bevor sowohl der innere Bremsbelag (24) als auch der äußere Bremsbelag (26) den Rotor (28) berühren, umfasst:
Erhalten von Daten, die die aufgebrachte Eingangskraft und/oder den Druck, der während des Bremsvorgangs aufgebracht wird, angeben; und
Vergleichen der Änderung der Verschiebung der Komponente der Kolbenanordnung (60) während des Bremsvorgangs mit der Eingangskraft und/oder dem Druck, der während des Bremsvorgangs aufgebracht wird.

3. Verfahren nach Anspruch 2, wobei das Bestimmen des Betrags der Verschiebung der Komponente der Kolbenanordnung (60), die aufgetreten ist, bevor sowohl der innere Bremsbelag (24) als auch der äußere Bremsbelag (26) den Rotor (28) berühren, ein Auftragen der Änderung der Verschiebung der Komponente der Kolbenanordnung (60) während des Bremsvorgangs über der Eingangskraft und/oder dem Druck, der während des Bremsvorgangs aufgebracht wird, auf einem Graphen und ein Verwenden eines Kniepunkterfassungsalgorithmus umfasst, um einen Kniepunkt (300) des Graphen zu identifizieren, der durch eine Änderung der Steigung des Graphen definiert ist, die angibt, dass der innere Bremsbelag (24) und der äußere Bremsbelag (26) den Rotor (28) berühren.

4. Verfahren nach Anspruch 3, umfassend ein Bestimmen des Betrags der Verschiebung der Komponente der Kolbenanordnung (60), die aufgetreten ist, bevor der innere Bremsbelag (24) den Rotor (28) berührt, durch Auftragen der Änderung der Verschiebung der Komponente der Kolbenanordnung (60) während des Bremsvorgangs über der Eingangskraft und/oder dem Druck, der während des Bremsvorgangs aufgebracht wird, auf einem Graphen und ein Verwenden eines Kniepunkterfassungsalgorithmus, um einen zweiten Kniepunkt (302) des Graphen zu identifizieren, der durch eine Änderung der Steigung des Graphen definiert ist, die angibt, dass der innere Bremsbelag (24) den Rotor (28) berührt, wobei der Kniepunkt des Graphen, der durch eine Änderung der Steigung des Graphen definiert ist, die angibt, dass der innere Bremsbelag und der äußere Bremsbelag den Rotor berühren, ein erster Kniepunkt (300) ist.

5. Bremsanordnung (10) für eine Scheibenbremse, die Bremsanordnung (10) umfassend:
ein Bremssattelgehäuse (20);
eine Kolbenanordnung (60), die beweglich in dem Bremssattelgehäuse (20) angeordnet und dazu konfiguriert ist, während eines Bremsvorgangs eine erste Bremsbelaganordnung (24) in axialer Richtung eines Bremsrotors (28) von einer ersten eingefahrenen Position in eine erste ausgefahrene Position zu betätigen;
eine Sensoranordnung (150), die dazu konfiguriert ist, die Position einer Komponente der Kolbenanordnung (60) zu erfassen, um die Verschiebung der Komponente der Kolbenanordnung (60) in axialer Richtung während des Bremsvorgangs anzugeben; **gekennzeichnet durch**
einen Einstellmechanismus (120), der operativ mit der Kolbenanordnung (60) verbunden und dazu konfiguriert ist, die erste ausgefahrene Position einzustellen, um ein akzeptables Gesamtlaufspiel zwischen der ersten Bremsbelaganordnung (24) und dem Rotor und einer zweiten Bremsbelaganordnung (26) und dem Rotor (28) sicherzustellen,
wobei die Sensoranordnung (150) relativ zum Bremssattelgehäuse (20) so fixiert ist, dass es während des Bremsvorgangs eine relative Bewegung zwischen der Sensoranordnung (150) und der Komponente der Kolbenanordnung (60) gibt,
wobei die Sensoranordnung (150) einen ersten Sensor (152) und einen zweiten Sensor (156) umfasst, wobei der erste Sensor (152) dazu konfiguriert ist, eine Position des Einstellmechanismus (120) zu erfassen, um den Gesamtverschleiß zu bestimmen, und der zweite Sensor (156) dazu konfiguriert ist, die Verschiebung der Komponente der Kolbenanordnung (60) in axialer Richtung zu erfassten.

6. Bremsanordnung (10) nach Anspruch 5, wobei die Sensoranordnung (150) weiter umfasst:
einen Verschleißsensorarm (142), der mit dem Einstellmechanismus (120) in Verbindung steht, wobei der Verschleißsensorarm (142) dazu konfiguriert ist, sich relativ zum Bremssattelgehäuse (20) in axialer Richtung zu verschieben, wenn der Einstellmechanismus (120) die erste ausgefahrene Position der Kolbenanordnung (60) einstellt,
wobei der erste Sensor (152) mit dem Verschleißsensorarm (142) in Verbindung steht, um die Verschiebung des Verschleißsensorarms (142) in axialer Richtung zu erfassen, und der zweite Sensor (156) mit der Komponente der Kolbenanordnung (60) in Verbindung steht, um die Verschiebung der Komponente der Kolbenanordnung (60) in axialer Richtung zu erfassen.

7. Bremsanordnung (10) nach Anspruch 6, wobei:
der Verschleißsensorarm (142) so konfiguriert ist, dass, wenn sich der Verschleißsensorarm (142)
verschiebt, der Verschleißsensorarm (142) ein erstes Betätigungselement (154) der Sensoranordnung (150) betätigt, wobei der erste Sensor (152) dazu konfiguriert ist, die Betätigung des Betätigungselements (154) zu erfassen; und
die Komponente der Kolbenanordnung (60) so konfiguriert ist, dass, wenn sich die Komponente der Kolbenanordnung (60) verschiebt, die Komponente der Kolbenanordnung (60) ein zweites Betätigungselement (158) der Sensoranordnung (150, 250) betätigt, wobei der zweite Sensor (156) dazu konfiguriert ist, die Bewegung des zweiten Betätigungselements (158) zu erfassen,
wobei optional das erste Betätigungselement (154) ein erster Stößel ist, der von dem ersten Sensor (152) aufgenommen wird, und das zweite Betätigungselement (158) ein zweiter Stößel ist, der von dem zweiten Sensor (156) aufgenommen ist.

8. Bremsanordnung (10) nach einem der Ansprüche 5 bis 7, wobei sich der erste Sensor (152) und der zweite Sensor (156) in einem gemeinsamen Gehäuse befinden, das relativ zum Bremssattelgehäuse (20) fixiert ist.

9. Bremsanordnung (10) für eine Scheibenbremse, die Bremsanordnung (10) umfassend:
ein Bremssattelgehäuse (20);
eine Kolbenanordnung (60), die beweglich in dem Bremssattelgehäuse (20) angeordnet und dazu konfiguriert ist, während eines Bremsvorgangs eine erste Bremsbelaganordnung (24) in axialer Richtung eines Bremsrotors (28) von einer ersten eingefahrenen Position in eine erste ausgefahrene Position zu betätigen; und
eine Sensoranordnung (250), die dazu konfiguriert ist, die Position einer Komponente der Kolbenanordnung (60) zu erfassen, um die Verschiebung der Komponente der Kolbenanordnung (60) in axialer Richtung während des Bremsvorgangs anzugeben;
**gekennzeichnet durch**
die Sensoranordnung (250) relativ zur Komponente der Kolbenanordnung (60) so fixiert ist, dass die Sensoranordnung (250) während des Bremsvorgangs zusammen mit der Komponente der Kolbenanordnung (60) in axialer Richtung verschoben wird,
wobei die Sensoranordnung (250) einen einzigen Sensor (252) umfasst, der konfiguriert ist zum Erfassen:
einer Position des Einstellmechanismus (120), um den Gesamtverschleiß zu bestimmen; und
der Verschiebung der Komponente der Kolbenanordnung (60) in axialer Richtung.

10. Bremsanordnung (10) nach Anspruch 9, wobei die Sensoranordnung (250) weiter umfasst:
einen Verschleißsensorarm (242), der mit dem Einstellmechanismus (120) in Verbindung steht, wobei der Verschleißsensorarm (242) dazu konfiguriert ist, sich relativ zum Bremssattelgehäuse (20) in axialer Richtung zu verschieben, wenn der Einstellmechanismus (120) die erste ausgefahrene Position der Kolbenanordnung (60) einstellt,
wobei der erste Sensor (252) mit dem Verschleißsensorarm (242) in Verbindung steht, um die Verschiebung des Verschleißsensorarms (242) in axialer Richtung zu erfassen, und der Sensor (252) auch mit der Komponente der Kolbenanordnung (60) in Verbindung steht, um die Verschiebung der Komponente der Kolbenanordnung (60) in axialer Richtung zu erfassen,
optional, wobei die Sensoranordnung (250) weiter ein Betätigungselement (254) umfasst, das relativ zu dem Verschleißsensorarm (242) so fixiert ist, dass, wenn sich der Verschleißsensorarm (242) verschiebt, das Betätigungselement (254) betätigt wird, wobei der Sensor (252) dazu konfiguriert ist, die relative Bewegung des Betätigungselements (254) und des Sensors (252) zu erfassen.

11. Bremsanordnung (10) nach Anspruch 10, wobei das Betätigungselement ein Stößel (254) ist, der von dem Sensor (252) aufgenommen ist.

12. Bremsanordnung (10) nach einem der Ansprüche 5 bis 11, wobei die Komponente der Kolbenanordnung eine Rücklaufplatte (132) ist, die während des Bremsvorgangs in axialer Richtung zu dem Rotor (28) der Scheibenbremse hin und von diesem weg betätigt wird, sodass die Sensoranordnung (150, 250) dazu konfiguriert ist, die Verschiebung der Rücklaufplatte (132) in axialer Richtung zu erfassen.

13. Bremsanordnung (10) nach einem der Ansprüche 5 bis 12, wobei die Komponente der Kolbenanordnung (60) einen Vorsprung (134) aufweist, der dazu konfiguriert ist, von der Sensoranordnung (150, 250) erfasst zu werden, um die axiale Bewegung der Komponente der Kolbenanordnung (60) anzugeben, um die Verschiebung der Komponente der Kolbenanordnung (60) während eines Bremsvorgangs anzugeben.

14. Bremsanordnung (10) nach Anspruch 13, wobei die Komponente der Kolbenanordnung (60) eine Rücklaufplatte (132) ist und der Vorsprung (134) eine Nase in einer Ecke der Rücklaufplatte (132) ist.

15. Steuereinheit, die dazu konfiguriert ist, das Verfahren nach einem der Ansprüche 1 bis 5 durchzuführen.

## Revendications

1. Procédé pour calculer le jeu fonctionnel total d'un frein à disque présentant des plaquettes (24, 26) de frein intérieure et extérieure agencées pour entrer en contact avec un rotor (28) pendant une opération de freinage, dans lequel un ensemble (60) piston est configuré pour actionner la plaquette (24) de frein intérieure du frein à disque, le procédé incluant :
la détection du mouvement axial d'un composant de l'ensemble (60) piston pour fournir des données indiquant le déplacement du composant de l'ensemble (60) piston pendant l'opération de freinage ; et
la détermination de la quantité de déplacement du composant de l'ensemble (60) piston qui se produit avant que la plaquette (24) de frein intérieure et la plaquette (26) de frein extérieure ne soient toutes deux en contact avec le rotor (28) pour fournir un jeu fonctionnel total calculé.

2. Procédé selon la revendication 1, dans lequel la détermination de la quantité de déplacement du composant de l'ensemble (60) piston qui se produit avant que la plaquette (24) de frein intérieure et la plaquette (26) de frein extérieure ne soient toutes deux en contact avec le rotor (28) comprend :
l'obtention de données indiquant la force d'entrée appliquée et/ou la pression exercée pendant l'opération de freinage ; et
la comparaison de la variation de déplacement du composant de l'ensemble (60) piston pendant l'opération de freinage par rapport à la force d'entrée et/ou à la pression appliquée pendant l'opération de freinage.

3. Procédé selon la revendication 2, dans lequel la détermination de la quantité de déplacement du composant de l'ensemble (60) piston qui s'est produite avant que la plaquette (24) de frein intérieure et la plaquette (26) de frein extérieure ne soient toutes deux en contact avec le rotor (28) comprend le traçage sur un graphique du changement de déplacement du composant de l'ensemble (60) piston pendant l'opération de freinage contre la force d'entrée et/ou la pression appliquée pendant l'opération de freinage et à l'aide d'un algorithme de détection de point d'articulation pour identifier un point (300) d'articulation du graphique, défini par un changement de gradient du graphique indiquant que la plaquette (24) de frein intérieure et la plaquette (26) de frein extérieure sont en contact avec le rotor (28).

4. Procédé selon la revendication 3, comprenant la détermination de la quantité de déplacement du composant de l'ensemble (60) piston qui s'est produite avant que la plaquette (24) de frein intérieure n'entre en contact avec le rotor (28) en traçant sur un graphique l'évolution du déplacement du composant de l'ensemble (60) piston pendant l'opération de freinage par rapport à la force d'entrée et/ou à la pression appliquée pendant l'opération de freinage et au moyen d'un algorithme de détection de point d'articulation pour identifier un second point (302) d'articulation du graphique, défini par un changement de gradient du graphique indiquant que la plaquette (24) de frein intérieure est en contact avec le rotor (28), dans lequel le point d'articulation du graphique défini par un changement de gradient du graphique indiquant que la plaquette de frein intérieure et la plaquette de frein extérieure sont en contact avec le rotor est un premier point (300) d'articulation.

5. Ensemble (10) frein pour un frein à disque, l'ensemble (10) frein comprenant :
un logement (20) d'étrier ;
un ensemble (60) piston disposé de façon mobile à l'intérieur du logement (20) d'étrier et configuré pour actionner un premier ensemble plaquette (24) de frein dans la direction axiale d'un rotor (28) de frein d'une première position rétractée à une première position étendue pendant une opération de freinage ;
un agencement (150) de capteurs configuré pour détecter la position d'un composant de l'ensemble (60) piston pour indiquer le déplacement du composant de l'ensemble (60) piston dans la direction axiale pendant l'opération de freinage ; **caractérisé par**
un mécanisme (120) de réglage qui est relié de manière opérationnelle à l'ensemble (60) piston et est configuré pour régler la première position étendue pour assurer un jeu fonctionnel total acceptable entre le premier ensemble plaquette (24) de frein et le rotor et un second ensemble (26) plaquette de frein et le rotor (28),
dans lequel l'agencement (150) de capteurs est fixé par rapport au logement (20) d'étrier de sorte qu'il y ait un mouvement relatif entre l'agencement (150) de capteurs et le composant de l'ensemble (60) piston pendant l'opération de freinage,
dans lequel l'agencement (150 de capteurs comprend un premier capteur (152) et un second capteur (156), le premier capteur (152) étant configuré pour détecter la position du mécanisme (120) de réglage pour déterminer l'usure totale, tandis que le second capteur (156) est configuré pour détecter le déplacement du composant de l'ensemble (60) piston dans la direction axiale.

6. Ensemble (10) frein selon la revendication 5, dans lequel l'agencement (150) de capteurs comprend en outre :
un bras (142) de capteur d'usure en communication avec le mécanisme (120) de réglage, le bras (142) de capteur d'usure étant configuré pour se déplacer par rapport au logement (20) d'étrier dans la direction axiale lorsque le mécanisme (120) de réglage règle la première position étendue de l'ensemble (60) piston,
dans lequel le premier capteur (152) communique avec le bras (142) de capteur d'usure pour détecter le déplacement du bras (142) de capteur d'usure dans la direction axiale, tandis que le second capteur (156) est en communication avec le composant de l'ensemble (60) piston pour détecter le déplacement du composant de l'ensemble (60) piston dans la direction axiale.

7. Ensemble (10) frein selon la revendication 6, dans lequel :
le bras (142) de capteur d'usure est configuré de sorte que le bras (142) de capteur d'usure
se déplace, le bras (142) de capteur d'usure actionne un premier organe (154) d'actionnement de l'agencement (150) de capteurs, dans lequel le premier capteur (152) est configuré pour détecter l'actionnement de l'organe (154) d'actionnement ; et
le composant de l'ensemble (60) piston est configuré de sorte que lorsque le composant de l'ensemble (60) piston se déplace, le composant de l'ensemble (60) piston actionne un second organe (158) d'actionnement de l'agencement (150, 250) de capteurs, dans lequel le second capteur (156) est configuré pour détecter le mouvement du second organe (158) d'actionnement,
facultativement dans lequel le premier organe (154) d'actionnement est un premier plongeur qui est reçu par le premier capteur (152) et le second organe (158) d'actionnement est un second plongeur qui est reçu par le second capteur (156).

8. Ensemble (10) frein selon l'une quelconque des revendications 5 à 7, dans lequel le premier capteur (152) et le second capteur (156) sont placés dans un logement commun fixé par rapport au logement (20) d'étrier.

9. Ensemble (10) frein pour un frein à disque, l'ensemble (10) frein comprenant :
un logement (20) d'étrier ;
un ensemble (60) piston disposé de façon mobile à l'intérieur du logement (20) d'étrier et configuré pour actionner un premier ensemble (24) plaquette de frein dans la direction axiale d'un rotor (28) de frein d'une première position rétractée à une première position étendue pendant une opération de freinage ; et
un agencement (250) de capteurs configuré pour détecter la position d'un composant de l'ensemble (60) piston pour indiquer le déplacement du composant de l'ensemble (60) piston dans la direction axiale pendant l'opération de freinage,
**caractérisé en ce que**
l'agencement (250) de capteurs est fixé par rapport au composant de l'ensemble (60) de piston de sorte que l'agencement (250) de capteurs soit déplacé conjointement avec le composant de l'ensemble (60) piston dans la direction axiale pendant l'opération de freinage,
dans lequel l'agencement (250) de capteurs comprend un seul capteur (252) configuré pour détecter :
une position du mécanisme (120) de réglage pour déterminer l'usure totale ; et
le déplacement du composant de l'ensemble (60) piston dans la direction axiale.

10. Ensemble (10) frein selon la revendication 9, dans lequel l'agencement (250) de capteurs comprend en outre :
un bras (242) de capteur d'usure en communication avec le mécanisme (120) de réglage, le bras (242) de capteur d'usure étant configuré pour se déplacer par rapport au logement (20) d'étrier dans la direction axiale lorsque le mécanisme (120) de réglage règle la première position étendue de l'ensemble (60) piston,
dans lequel le capteur (252) est en communication avec le bras (242) de capteur d'usure pour détecter le déplacement du bras (242) de capteur d'usure dans la direction axiale et le capteur (252) est également en communication avec le composant de l'ensemble (60) piston pour détecter le déplacement du composant de l'ensemble (60) piston dans la direction axiale,
facultativement dans lequel l'agencement (250) de capteurs comprend en outre un organe (254) d'actionnement fixé par rapport au bras (242) de capteur d'usure de sorte que lorsque le bras (242) de capteur d'usure se déplace, l'organe (254) d'actionnement s'actionne, le capteur (252) étant configuré pour détecter le mouvement relatif entre l'organe (254) d'actionnement et le capteur (252).

11. Ensemble (10) frein selon la revendication 10, dans lequel l'organe d'actionnement est un plongeur (254) qui est reçu par le capteur (252).

12. Ensemble (10) frein selon l'une quelconque des revendications 5 à 11, dans lequel le composant de l'ensemble piston est une plaque (132) de retour qui agit dans une direction axiale en direction et à partir du rotor (28) du frein à disque pendant l'opération de freinage, de sorte que l'agencement (150, 250) de capteurs soit configuré pour détecter le déplacement de la plaque (132) de retour dans la direction axiale.

13. Ensemble (10) frein selon l'une quelconque des revendications 5 à 12, dans lequel le composant de l'ensemble (60) piston comprend une saillie (134) configurée pour être détectée par l'agencement (150, 250) de capteurs pour indiquer le mouvement axial du composant de l'ensemble (60) piston, pour indiquer le déplacement du composant de l'ensemble (60) piston pendant une opération de freinage.

14. Ensemble (10) frein selon la revendication 13, dans lequel le composant de l'ensemble (60) piston est une plaque (132) de retour et la saillie (134) est une languette dans un coin de la plaque (132) de retour.

15. Dispositif de commande configuré pour mettre en œuvre le procédé selon l'une quelconque des revendications 1 à 5.
